# EUROPEAN PATENT APPLICATION

(11) **EP 1 315 160 A1**
(43) Date of publication of application: **28.05.2003**
(21) Application number: 02257600.3
(22) Date of filing: 01.11.2002
(51) Int. Cl.: G11B 15/07, G11B 23/03

(54) **Apparatus for and method of retrieving data**

(30) Priority: 14.11.2001 US 2547
(71) Applicant: Hewlett-Packard Company, Palo Alto, CA 94304 (US)
(72) Inventor: Johnson, Kristianne E., 7C Fort Collins, CO 80525 (US); Reasoner, Kelly J., Fort Collins, CO 80526 (US)
(74) Representative: Jehan, Robert

(57) **Abstract**

In a media storage system (10;100) including an enclosure (12) having a user-accessible surface (16;116), an apparatus for retrieving data cartridge-related information from a memory unit (50;112) mounted to a data cartridge (30;102) in relationship to a surface (44;110) of the housing (32;104) of the cartridge. The apparatus comprises a registration area (62;114) on the user-accessible surface (16;116) of the enclosure (12), the registration area being configured to be engaged by the surface (44;110) of the data cartridge housing in registration with the registration area. The apparatus further comprises a reader (64;120) mounted to the media storage system for receiving from the memory unit (50;112) a signal containing the data cartridge-related information when the surface of the data cartridge housing is held in engagement with the registration area (62;14).

Also disclosed is a method of transferring data cartridge-related information between an IC memory unit (50;112) mounted to a data cartridge (30;102) and an IC memory unit reader (64;120) mounted to a media storage system, the IC memory unit being mounted in relationship to a surface (44;110) of the cartridge and the IC memory unit reader being mounted in relationship to a user-accessible surface (16;116) of the media storage system. The method comprises the steps of manually positioning the data cartridge (30;102) so as to hold the surface (44;110) of the data cartridge into registered engagement with a registration area (62;114) on the user-accessible surface of the media storage system; and transferring the information between the IC memory unit (50;112) and the IC memory unit reader (64;120).

## Description

The present invention pertains generally a method and apparatus for retrieving data cartridge-related information from a data cartridge memory.

Media storage systems or automated backup systems are commonly used to store data cartridges and to retrieve desired data cartridges so that computer-readable data may be written to or read from the data cartridges by means of a read/write drive. Large volumes of computer-readable data thus can be stored on numerous data cartridges and accessed by a single computer or by multiple computers connected to the media storage system over a network. Media storage systems are often referred to as "juke box" storage systems, and typically include at least one data cartridge storage rack or magazine, and other features.

When a computer connected to the media storage system issues a request to access a data cartridge to read data therefrom and/or write data thereto, a control system moves a robotic cartridge access mechanism relative to the magazines until the cartridge access mechanism is positioned adjacent the requested data cartridge. The cartridge access mechanism then removes the requested data cartridge from the magazine and delivers it to the read/write drive for transferring data to and/or from the cartridge.

Once a request to access a data cartridge is received, the control system must be able to locate or otherwise recognize the requested data cartridge in the storage rack. To this end, each data cartridge may be labeled with a machine-readable code, such as a bar code, which is read by a scanner attached to the data cartridge access mechanism. The machine-readable label may also provide information for automated data cartridge inventory and tracking.

Because a machine-readable label can contain only a limited amount of information (for example, an identification number) and cannot be rewritten, each data cartridge may also include a read/writable electronic or IC memory unit capable of storing a substantial quantity of additional data cartridge-related information such as service history, errors, usability, and so forth. An IC memory unit is typically attached on or immediately adjacent to a surface of the data cartridge housing. The media storage system includes a reader positionable to communicate with an IC memory unit carried by the data cartridge. The media storage system further includes a display coupled to the system controller for displaying to a user, among other things, selected information stored in the IC memory unit.

Communication between the reader and the IC memory unit is effected via a communication interface comprising, for example, a radio frequency (RF) link including a transponder forming part of the IC memory unit, or electrical contacts or terminals. An example of the former is disclosed in U.S. patent application Serial No. 09/754,955 filed January 4, 2001 for APPARATUS AND METHOD FOR RETRIEVING DATA RELATED TO A DATA CARTRIDGE IN A MEDIA STORAGE SYSTEM and owned by the applicant of this application. An example of the latter is disclosed in U.S. Patent No. 5,867,335 issued on February 2, 1999 to Ozue, et al., and titled AUTOCHANGER. The automated control of the positioning of the data cartridge within the media storage system assures that the IC memory will be properly aligned and positioned relative to the reader to assure reliable information transfer between the IC memory unit and the reader.

Often a user wishes to view on the display the information or selected parts thereof stored in the data cartridge's IC memory unit. A drawback of present media storage systems is that for the user to view the contents of the IC memory unit, the user must insert the data cartridge into the media storage system so that the contents of the IC memory unit can be read by the reader within the system. This is a time consuming process.

The present invention seeks to provide improved data storage.

According to an aspect of the present invention there is provided apparatus for retrieving data as specified in Claim 1.

According to another aspect of the present invention there is provided a method of transferring data as specified in Claim 10.

The preferred embodiment permits a user quickly to retrieve and display the contents of the IC memory unit without having to load the data cartridge into the media storage system.

In accordance with one specific exemplary embodiment of the present invention, there is provided in a media storage system including an enclosure having a user-accessible surface, an apparatus for retrieving data cartridge-related information from a memory unit mounted to a data cartridge in relationship to a surface of the housing of the cartridge. The apparatus comprises a registration area on the user-accessible surface of the enclosure, the registration area being configured to be engaged by the surface of the data cartridge housing in registration with the registration area. The apparatus further comprises a reader mounted to the media storage system for receiving from the memory unit a signal containing the data cartridge-related information when the surface of the data cartridge housing is held in engagement with the registration area.

The preferred method of transferring data cartridge-related information between an IC memory unit mounted to a data cartridge and an IC memory unit reader mounted to a media storage system, the IC memory unit being mounted in relationship to a surface of the cartridge and the IC memory unit reader being mounted in relationship to a user-accessible surface of the media storage system, comprises the steps of manually positioning the data cartridge so as to hold the surface of the data cartridge into registered engagement with a registration area on the user-accessible surface of the media storage system; and transferring the information between the IC memory unit and the IC memory unit reader.

An embodiment of the present invention is described below, by way of example only, with reference to the accompanying drawings, in which:
FIG. 1 is a perspective view of an embodiment of media storage system in the form of an autoloader;
FIG. 2 is a simplified side elevation view, in cross section, of a portion of the media storage system of FIG. 1 in relationship to a data cartridge;
FIG. 3 is a simplified side elevation view, in cross section, of a portion of the media storage system of FIG. 1 showing a data cartridge positioned relative to the media storage system for effecting the transfer of data cartridge-related information between an IC memory unit carried by the data cartridge and a reader mounted within the media storage system;
FIG. 4 is a simplified front elevation view of an IC memory unit reader that may be used in connection with the preferred system;
FIG. 5 is a simplified front elevation view of an IC memory unit comprising a memory unit chip and an associated transponder that may be used in connection with the preferred system; and
FIG. 6 is a simplified side elevation view, in cross section, of a portion of a media storage system and a data cartridge in accordance with an alternative embodiment of the invention showing the data cartridge positioned relative to the media storage system for effecting the transfer of data cartridge-related information between an IC memory unit carried by the data cartridge and a reader mounted within the media storage system.

It should be noted that although the preferred apparatus and method are described in the context of a particular media storage system, namely, an autoloader, the teachings herein are not limited thereto but are applicable to any of a wide range of media storage systems now known in the art or that may be developed in the future. It should also be noted that while the media storage system shown and described herein is used to store and retrieve a data cartridge having a standard size and configuration, the invention is not so limited. Indeed, the apparatus and method may be applied to any type of media storage system, data storage cartridge unit and associated storage medium, including, without limitation, magnetic, optical, and magneto-optic media whether in the form of tape, disk or otherwise.

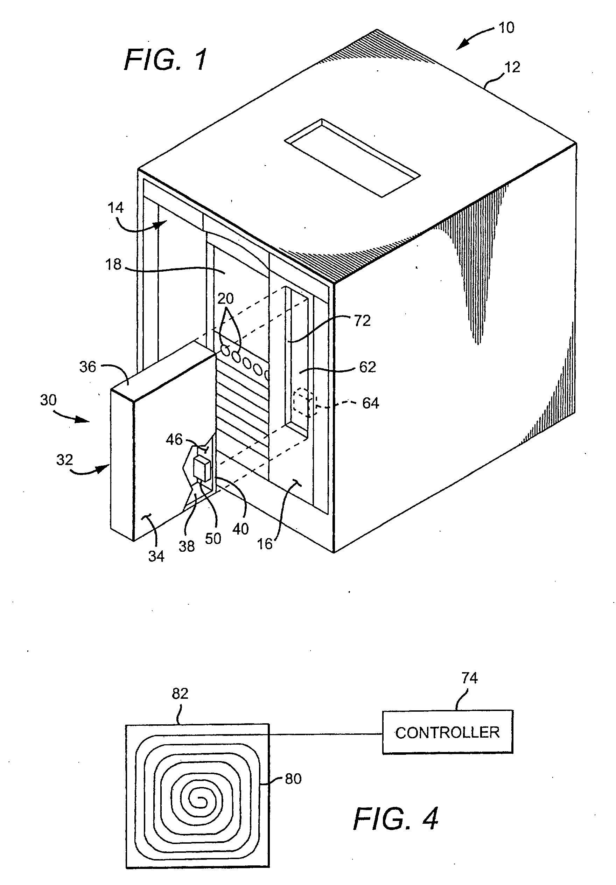

FIG. 1 shows a media storage system 10 in the form of an autoloader in accordance with a first embodiment of the invention. The autoloader 10 includes a cabinet or enclosure 12 containing a control system, a tape read/write drive and a robotic data cartridge access mechanism for transporting data cartridges between a data cartridge magazine and the read/write drive. Since these components are well-known in the art, they are not shown in the drawings. The enclosure 12 includes a front panel or bezel 14 typically comprising a molded plastic piece. The bezel 14 includes a front surface 16 accessible by a user of the autoloader. The front of the autoloader 10 further includes a display 18 viewable by the user and an array of display control buttons 20.

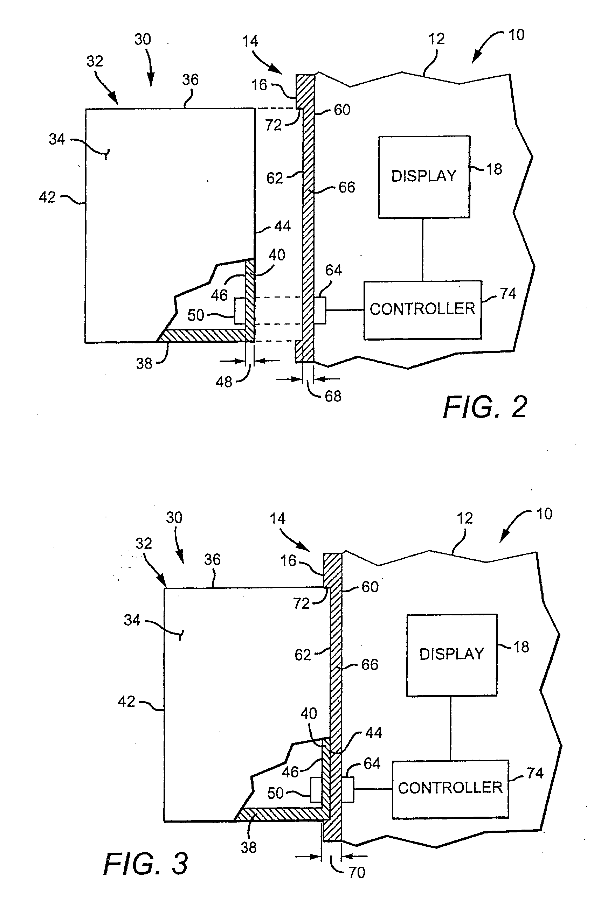

FIGS. 1-3 show in simplified form a typical data cartridge 30 whose IC memory unit contents a user desires to retrieve without having to insert the data cartridge into the autoloader 10. The cartridge 30 comprises a generally rectangular housing 32 defined by opposed side walls 34, top and bottom walls 36 and 38, respectively, and front and rear walls 40 and 42, respectively, each wall having outer and inner surfaces. Thus, the front wall 40 has an outer surface 44, an inner surface 46 parallel with the outer surface, and a wall thickness identified by the reference numeral 48. Mounted on the inner surface 46 of the front wall of the housing, adjacent to the bottom wall 38 thereof, is an IC memory unit 50 for storing updatable data cartridge-related information. Although the IC memory unit 50 is shown mounted at a location on the data cartridge 30 typifying that used in today's data cartridges, it will be evident to those skilled in the art that the IC memory unit may be mounted at other locations in or on the data cartridge housing 32, for example, on the inner surface of any of the other housing walls. As already explained, the autoloader 10 also incorporates a reader (not shown) which may be carried by the data cartridge access mechanism or the read/write drive so as to be positionable to communicate with the IC memory unit 50 carried by the data cartridge. Information read out from the IC memory unit 50 may be displayed to the user on the display at the front of the autoloader. (As used herein, the term "reader" encompasses a bidirectional device capable of both reading from and writing to the IC memory.) As will be explained in greater detail below, in the embodiment under consideration, communication between the reader and the IC memory unit 50 is effected by an RF link including a transponder incorporated in the IC memory unit 50.

Radio frequency identification (RFID) technology is preferably used for communication between the reader and the transponder of the IC memory unit. Because RFID is a low-power transmission technology, for reliable communication to take place, the transmission range must be kept small, for example, about 3mm, and relatively precise. The automated data cartridge access mechanism within the autoloader can be designed to adjust the position of the data cartridge relative to the reader so that reliable transmission of the data cartridge-related information is assured. As noted, such mechanisms are well-known in the art.

The bezel 14 includes an inner surface 60 parallel with the bezel's front surface 16. The front surface 16 of the bezel 14 is provided with a data cartridge registration area 62 for engagement by the front outer surface 44 of the data cartridge housing 32. Mounted on the inner surface 60 opposite the lower portion of the registration area 62 is a registration area reader 64. The portion of the front surface 16 of the bezel 14 defining the registration area 62 defines with the inner surface 60 of the bezel a wall 66 having a thickness identified by the reference numeral 68. The combined thickness 70 of the front wall 40 of the data cartridge housing 32 and the wall 66 of the bezel along the registration area establishes the transmission range between the transponder of the IC memory unit 50 and the registration area reader 64.

The registration area 62 may take various forms. Preferably, as shown in the drawings, it comprises a shallow recess in the front surface 16 of the bezel 18. The recess has a periphery 72 configured to conform to the rectangular configuration of the front outer surface 44 of the data cartridge housing so that when the front surface 44 of the data cartridge housing is brought into registered engagement with the registration area 62, the data cartridge is maintained in the proper positional relationship relative to the registration area reader 64 to effect reliable information transfer between the transponder of the IC memory unit 50 and the reader 64. Features molded into the recess may instruct the user as to the proper orientation of the correct cartridge surface relative to the recess. It will be evident that instead of comprising a recess, the registration area 62 may simply be defined by an outline or colored area on the front surface 16 of the bezel 14. Other alternatives can comprise guides or other projections extending from the front surface 16 of the bezel 18 for engaging the portions of the outer surfaces of the data cartridge housing adjacent the front wall carrying the IC memory unit 50.

To read the contents of the IC memory unit 50 of a particular data cartridge 30 without the necessity of having to load the cartridge into the autoloader or library, a user need simply manually hold the front outer surface 44 of the data cartridge 30 into registered engagement with the registration area 62 on the bezel 14. The combined thickness 70 of the walls 40 and 68 automatically assures that the IC memory unit transponder is thereby brought into the proper transmission range relative to the registration area reader 64 mounted on the rear or inside surface of the bezel. Once the registration area reader 64 is within the transmission range of the transponder, the reader 64 activates the transponder of the IC memory unit 50 and triggers a response (a signal containing the data cartridge-related information) from the transponder. The registration area reader 64 is connected to a controller 74 forming part of the autoloader control system, which controller, in turn, controls the flow of information read from the IC memory unit 50 to the display 18 on the front of the autoloader and/or to a system computer. The system can be arranged so that the controller 74 constantly scans for the presence of a cartridge within transmission range of the registration area reader 64 thereby eliminating the need for any additional initiation of the read process by the user. As soon as a cartridge comes within range, the display 18 informs the user that the'data has been read and the user can then step through displayed menu choices using the control buttons 20 to view more data than can be displayed on only one screen.

The use of an RF link between the IC memory unit 50 and the reader 64 reduces or eliminates any wear that may occur were the registration area reader 64 and the IC memory unit 50 to be in repeated physical contact with one another. The invention is not limited to any particular transmission range which may be more or less than 3mm. The transmission range may vary depending on design considerations such as the transmission and receiving capabilities of the registration area reader 64 and the transponder of the IC memory unit 50, the likelihood of interference or crosstalk. Other design considerations may include the respective power requirements of the reader 64 and the IC memory unit transponder, the signal detection capability of the reader 64, the transmission frequencies and the rate of transmission.

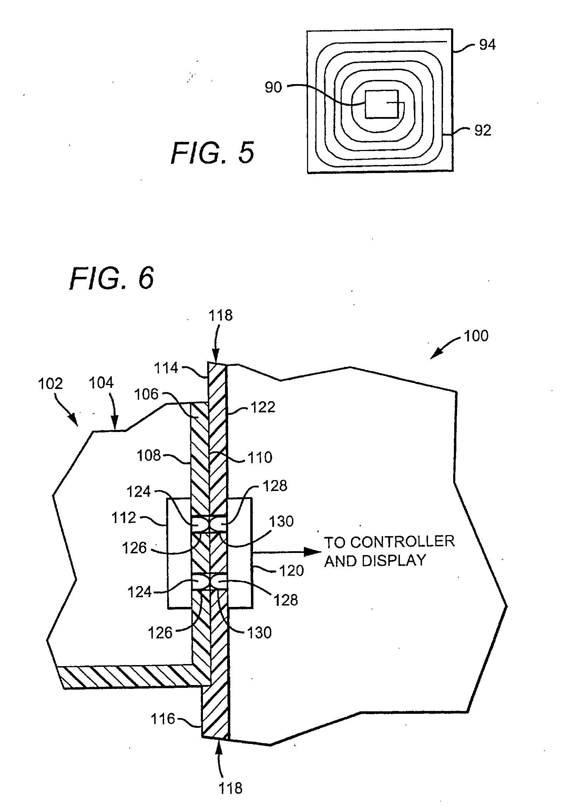

With reference to FIG.4, the registration area reader 64 of the first described embodiment includes an antenna 80 comprising, for example, numerous turns of fine wire forming a coil preferably etched on a printed circuit substrate 82. The registration area reader 64 is operatively associated with the controller 74, that is, the controller 74 is linked (via a direct or remote connection) with the reader 64 for communication therebetween. For example, where the reader 64 is an inductive device, the controller 74 may cause an electrical current to pass through the antenna 80, thus generating an energy field for activating the transponder of the IC memory unit 60. Once the IC memory unit transponder is activated, the controller 74 may transmit an interrogation signal through the antenna 80 querying the IC memory unit transponder. Likewise, when the reader 64 receives from the IC memory unit transponder a response or a signal representing the data cartridge-related information, the signal is delivered to the controller 74 for further processing. For example, the controller 74 may convert the received signal into a user-readable format for output at the display 18. The controller 74 may also generate or update an inventory database with the information relating to the data cartridge contained in the signal. Still further, the controller 74 and reader 64 can be used to update or otherwise revise the information stored in the IC memory unit 50.

With reference to FIG. 5, the IC memory unit 50 of the first embodiment of the invention preferably includes a low-powered IC memory chip 90 coupled to a transponder in the form of an antenna 92. The antenna 92 preferably comprises a coil of numerous turns of fine wire etched on a printed circuit substrate 94. The IC memory chip 90 preferably includes a processor (or processing logic) and at least one memory. The processor receives the query signal from the reader 64 at the antenna 92. The processor retrieves data stored in the IC memory chip 90 and generates a response or signal containing the information requested by the query. The signal is transmitted via the antenna 92 and received at the antenna 80 on the reader 64. While the IC memory chip 90 and antenna 92 are shown fabricated on a single printed circuit board, these elements can comprise separate components coupled to one another.

The IC memory chip 90 can comprise any suitable memory including, without limitation, Read Only Memory (ROM), Random Access Memory (RAM), non-volatile programmable memory (e.g., Electrically Erasable Programmable Read Only Memory or EEPROM), or write-once/read many (WORM) memory, or other memory now known or later developed.

The registration area reader 64 and the transponder of the IC memory unit 50 preferably use radio frequency identification (RFID) technology. Generally, RFID transponders have small power requirements (e.g., in the microwatt to milliwatt range), and can be passive, active, or a combination thereof. RFID technology is well understood in the art. However, it is understood that the registration area reader 64 and the IC memory unit transponder are not limited to RFID technology and can include other communication technologies, including infrared (IR), now known or later developed.

FIG. 6 is shows a portion of a media storage system 100 and a data cartridge 102 in accordance another embodiment of the invention. The data cartridge 102 includes a housing 104 defined in part by a front wall 106 having parallel inner and outer surfaces 108 and 110, respectively. Mounted on the inner surface 108 of the front wall 106 adjacent the lower extremity thereof is an IC memory unit 112. The data cartridge 102 is shown with its front outer surface 110 positioned manually by the user in engagement with a registration area 114 on the front outer surface 116 of a bezel 118 for effecting the transfer of data cartridge-related information between the IC memory unit 112 and a registration area reader 120 mounted on an inner surface 122 of the bezel 118. The registration area 114 may take any of the forms described earlier. An electrical communication interface for transferring data cartridge-related information between the IC memory unit 112 and the reader 120 comprises, in the embodiment under consideration, a pair of IC memory unit terminals 124 projecting through, openings 126 in the front wall 106 of the data cartridge in electrical contact with a corresponding pair of registration area reader terminals 128 projecting through openings 130 in the front wall of the bezel 118. In the embodiment sown in FIG. 6, the terminals 124 and 128 have substantially equal lengths. It will be obvious, however, that the lengths of the terminals 124 and 128 may be varied from that shown. For example, the terminals 124 may project from the outer front surface 110 of the housing 104 a sufficient distance to extend to reader terminals flush with the front surface of the reader 120. The embodiment of FIG. 6 may be somewhat less desirable than the embodiment of FIGS. 1-5 because contact wear and/or oxidation may adversely affect the reliability of the transferred signal.

The features of the different embodiments disclosed herein may be combined with one another.

The disclosures in United States patent application No. 10/002,547, from which this application claims priority, and in the abstract accompanying this application are incorporated herein by reference.

## Claims

1. Apparatus for retrieving data cartridge-related information from a memory unit (50;112) mounted to a data cartridge (30;102) in relationship to a surface (44;110) of a housing (32;104) of the cartridge a media storage system (10;100) including an enclosure (12) having a user-accessible surface (16;116), the apparatus including:
a registration area (62;114) on the user-accessible surface (16;116) of said enclosure (12), said registration area being configured to be engaged by said surface (44;110) of the data cartridge housing in registration with said registration area; and
a reader (64;120) mounted to said media storage system for receiving from said memory unit (50;112) a signal containing said data cartridge-related information when said surface of the data cartridge housing is held in engagement with said registration area (62;114).

2. Apparatus as in claim 1, wherein the enclosure includes a bezel (14;118) and the user-accessible surface (16;116) comprises an outer surface of the bezel.

3. Apparatus as in claim 1 or 2, wherein the registration area is provided by indicia on the user-accessible surface (16;116) of said enclosure.

4. Apparatus as in claim 1, 2 or 3, wherein the registration area is provided by indicia on the user-accessible surface (16;116) of said enclosure.

5. Apparatus as in any preceding claim, including a communication interface (80,92;124,128) between the memory unit (50;112) and the reader (64;120) when said surface (44;110) of the data cartridge housing is held in engagement with said registration area (62;14), said communication interface transferring said signal between said memory unit and said reader.

6. Apparatus as in claim 5, wherein the memory unit (50) includes a transponder.

7. Apparatus as in claim 6, wherein the communication interface comprises an RF link between the transponder and the reader (64).

8. Apparatus as in claim 5, wherein the communication interface comprises electrical terminals (124;128) on said memory unit (112) and said reader (120).

9. Apparatus as in any preceding claim, including a display (18) for displaying data cartridge-related information retrieved from said memory unit.

10. A method of transferring data cartridge-related information between an IC memory unit (50;112) mounted to a data cartridge (30;102) and an IC memory unit reader (64;120) mounted to a media storage system, the IC memory unit being mounted in relationship to a surface (44;110) of said cartridge and the IC memory unit reader being mounted in relationship to a user-accessible surface (16;116) of said media storage system, the method including the steps of:
manually positioning the data cartridge (30;102) so as to hold said surface (44;110) of said data cartridge into registered engagement with a registration area (62;114) on the user-accessible surface of said media storage system; and
transferring said information between the IC memory unit (50;112) and the IC memory unit reader (64;120).

11. A method as claimed in claim 10, including the step of displaying selected information transferred from the IC memory unit to the IC memory unit reader.
